# EUROPEAN PATENT SPECIFICATION

(11) **EP 1 567 603 B1**
(45) Date of publication and mention of the grant of the patent: **16.08.2006**
(21) Application number: 03769003.9
(22) Date of filing: 19.11.2003
(51) Int. Cl.: C09D 4/00, C09D 183/08, B41J 2/135, B41J 2/16

(54) **FLUID CONDUIT AND PROCESS THEREFOR**
FLUIDLEITUNG UND VERFAHREN ZU DESSEN HERSTELLUNG
CONDUIT DE FLUIDE ET PROCEDE AFFERENT

(30) Priority: 21.11.2002 JP 2002337779
(43) Date of publication of application: 31.08.2005
(73) Proprietor: E.I. DU PONT DE NEMOURS AND COMPANY, Wilmington, DE 19898 (US); Nikken Coating Industry Company, Ltd., Tokyo 116-0002 (JP)
(72) Inventor: SUNADA, Yukiyoshi, Arakawa-ku, Tokyo 116-002 (JP); IWATO, Satoko, Shibuya-ku, Tokyo 150-0001 (JP); KEDAMORI, Konosuke, Minamisaitama-gun, Saitama 394-0215 (JP); TATSUNO, Hozue, Meguro-ku, Tokyo 153-0064 (JP)
(74) Representative: Morf, Jan Stefan
(86) International application number: PCT/US2003/037248
(87) International publication number: WO 2004/048483

(56) References cited:
- EP-A- 0 195 292
- EP-A- 1 386 951
- EP-B- 0 367 438
- WO-A-01/90267
- WO-A-96/06895
- PATENT ABSTRACTS OF JAPAN vol. 1998, no. 06, 30 April 1998 (1998-04-30) & JP 10 029308 A (TOYO RIKEN KK), 3 February 1998 (1998-02-03)
- PATENT ABSTRACTS OF JAPAN vol. 1999, no. 03, 31 March 1999 (1999-03-31) & JP 10 323979 A (SEIKO EPSON CORP), 8 December 1998 (1998-12-08)
- PATENT ABSTRACTS OF JAPAN vol. 2000, no. 20, 10 July 2001 (2001-07-10) & JP 2001 063043 A (BROTHER IND LTD), 13 March 2001 (2001-03-13)

## Description

### FIELD OF THE INVENTION

The invention relates to a fluid conduit such as, for example, a nozzle and a method for producing the conduit.

### BACKGROUND OF THE INVENTION

If the surface of a conduit such as, for example, a nozzle, is adhered with materials such as a fluid or its dry form, the nozzle function can be hindered by the materials adhered. One way to solve the problem is to wipe off the conduit to remove the adhering materials. It would be a great contribution to the art if the conduit can be made fluid-repellent. It would also be a great contribution to the art if the repellency is made abrasion-resistant and durable. It is also desirable to freely select the thickness and site of application of a repellency layer generated on the nozzle, in accordance with the nozzle material, structure, dimension and usage.

EP-B-0 367 438, EP-A-0 195 292 and WO 96/06896 A all disclose the need to coat conduits, such as those of ink jet nozzles, and benefits obtained by using compositions containing fluorocarbon silanes as a suitable coating. EP-B-0 367 438 describes a two-step process for coating an ink jet recording head. In step one a first layer is formed on the surface of the substrate to provide an adherent coating. After curing said first layer, a fluorosilane is added thereto. Thus EP-B-0 367 438 teaches the need for a first adhesion layer prior to use of any fluorosilane. In EP-A-0 195 292 a method for coating an ink jet nozzle plate with a fluorocarbon silane and a perfluorinated alkane using radio frequency glow discharge in a gas phase reaction system is used. WO 96/06895 A teaches the use of particular combinations of crosslinked copolysiloxanes and surfaces to provide adhesion and resistance to wettability. For example, copolysiloxanes having -COOH groups are used to bond with glass and metal surfaces, and copolysiloxanes having Zerewitinoff hydrogen atoms are being used with polyimide substrates.

The invention illustrates that a decline of a nozzle function can be avoided by applying a durable fluid-repellent layer to the nozzles so that the nozzle function cannot be hindered by the materials adhered. A fluid (such as ink) can be ejected without high friction resistance or adhering to the nozzle. The invention also illustrates that repellency function can be obtained even if the layer is very thin (about 0.1-10000 nm). Therefore, the thickness of the layer doesn't influence on the dimension of the conduit or device. For example, an ink jet printer nozzle has holes sized about 10-50 micrometer, such thin layer does not impede the nozzle's precise (accurate) function. If the layer thickness is thicker, the function of a nozzle can be greatly influenced.

### SUMMARY OF THE INVENTION

A conduit having its surface applied or coated thereon a thin layer in which the thin layer is produced from one or more fluorocarbon silanes or hydrolyzates thereof.

### DETAILED DESCRIPTION OF THE IIWENTION

This application has a pending corresponding Japanese application 2002-33 7779, filed Nov. 21, 2002. The English translation of the Japanese application 2002-337779 is incorporated herein by reference.

This invention relates to a conduit having its surface or a portion of its surface coated with a fluid-repellent layer, wherein said layer is produced from a substantially aqueous emulsion; said layer has a thickness of from 0,1 nm to 10,000 nm; said emulsion is produced from (1) a fluorocarbon silane or its hydrolyzate, (2) water, and (3) a surfactant, a silicon compound, and a catalyst which is an acid; said fluorocarbon silane has the formula Rᵣ(CH₂)ₚ-Si{-(O-CH₂CH₂)ₙ-OR¹}₃, said silicon compound is a silicate or an organoalkoxysilane; R_{f} is a C₃₋₁₈ perfluoroalkyl group or combinations of two or more thereof; each R¹ is independently one or more C₁₋₃ alkyl groups; p is 2 to 4; and n is 2 to 10.

The term "conduit" refers to, unless otherwise indicated, a device that can transport or transfer a fluid. Examples of conduits include, but are not limited to, nozzles, tubes, pipes, cylinders, and combinations of two or more thereof. The term "nozzle" in this invention includes nozzles used not only in office machines such as printers, word processors, facsimiles, or photocopiers, but also those used in automobiles, molding machines, washing machines, printing machines, semiconductor-related machines, or dispensers. One such nozzle is a plate nozzle having holes such as that used in a printer for ejecting ink. The word "surface" means not only an exterior surface, but also an interior surface of a conduit such as a nozzle. The term "fluid-repellency" represents the ability to repel fluids over a broad range of fluids such as, for example, water, oils, emulsions, solid dispersions, liquid dispersions, pastes, or adhesives.

A conduit can be made from any known substrates such as, for example, metal (such as stainless steel, aluminum, and the like), glass, ceramics, plastics, polyimides, paper, tile, brick, concrete, wood, masonry, fiber, leather, stone, and combinations of two or more thereof.

The term "thin" refers to a thickness of less than 0.1 to 10,000, or less than 1 to 1,000 nanometers (nm).

The coating can be applied with any desired means of application such as dipping, brushing, spray vapor depositing, printing, spin coating, transferring, flow coating and combinations of two or more thereof.

The fluorocarbon silane or its hydrolysate can be derived from an emulsion comprising the fluorocarbon silane or its hydrolyzate. The emulsion suitable comprises a fluorocarbonsilane or its hydrolyzate, water, and a surfactant, a silicon compound, and a catalyst. The emulsion can comprise a fluorocarbon silane or its hydrolyzate in the range of from 0.01 to 40, preferably 0.1 to 20% by weight. The molar ratio of the silicon compound moiety to the fluorocarbon silane or its hydrolyzate can be in the range of 0.1:1 to 10:1. The weight ratio of the fluorocarbon silane or its hydrolyzate to surfactant can be in the range of 0.1:1 to 10:1 or 1:1 to 10:1. The catalyst is an acid. An effective amount of catalyst is generally the amount that can adjust the pH of the emulsion composition to 4.5 or less such as 2 to 4.5 or to 7 or more such as 7 to 12. Water generally makes up the rest of the emulsion.

The fluorocarbon silane has the formula of R_{f}-(CH₂)ₚ-Si{-(O-CH2CH2)n-OR¹}₃ where R_{f} is at least one perfluoroalkyl group containing 3 to 18 carbon atoms; each R¹ can be the same or different alkyl groups containing 1 to 3 carbon atoms; p=2-4; and n=2-10. R_{f} can also be a mixture of perfluoroalkyl groups containing an average of 8 to 12 carbon atoms; R¹ is methyl; and p=2; and n=2-4 (optionally n=2-3). When n is 2, it can be a perfluoro alkyl ethyl tris(2-(2-methoxyethoxy)ethoxy)silane and when n=3, it can be perfluoro alkyl ethyl tris(2-(2-(2-methoxyethoxy)ethoxy)ethoxy) silane. Such fluorocarbon silanes can be prepared by any methods known to one skilled in the art.

The silicon compound to be used for producing the emulsion is, for example, one comprising one or more alkoxy groups or its partial condensation product. For example, a silicate having the formula of Si-(R)₄ can be used in which R is one or more groups selected from the group consisting of OCH₃, OCH₂CH₃, and (OCH₂CH₂)ₘOCH₃ (m=1-10). An organoalkoxysilane also can be used having the formula of R²_{q}Si(OR³)_{4-q} in which each R² can be the same or different and is independently an alkyl group containing 1 to 10 carbon atoms; each R³ can be the same or different alkyl groups independently containing 1 to 3 carbon atoms; and q=1-3. The alkyl group represented by R² can be substituted by, for example, amino, epoxy, vinyl, methacryoxy, thiol, urea, mercapto, or combinations of two or more thereof. Specific examples of organoalkoxysilane compounds include, but are not limited to, tetrakis(2-(-2-methoxyethoxy)-ethoxy)silicate, dimethyldimethoxysilane, methyltrimethoxy silane, 3-aminopropyltriethoxy silane, N-(2-aminoethyl)3-aminopropylmethyldiethoxy silane, 3-glycidoxypropyltrimethoxy silane, one or more partial condensation products thereof, and combinations of two or more thereof.

An acid is used as a catalyst. Such an acid substance can be any one known to one skilled in the art. For example, phosphoric acid, boric acid, hydrochloric acid, sulfuric acid, nitric acid, acetic acid, formic acid, or combinations of two or more thereof, can be used.

Any surfactants that can stabilize the above-described emulsion may be used. The surfactant generally is a surfactant having an HLB value sufficiently high to inhibit self-condensation of the fluorocarbon silane hydrolysis product The term "HLB" refers to the HLB system published by ICI America's, Inc., Wilmington, Delaware; Adamson, A.W., "Physical Chemistry of Surfaces", 4^{th} edition, John Wily & Sons, New York, 1982). The surfactant can be anionic, cationic, nonionic, amphoteric, or combinations thereof. The preferred surfactants are those with HLB values greater than 5, preferably greater than 12, and more preferably greater than 16. Examples of nonionic surfactants include, but are not limited to, R_{f}¹-CH₂CH₂-O-(CH₂CH₂O)₁₁-H, C₉H₁₉-C₆H₄-O-(CH₂CH₂O)₅₀-H, other nonionic surfactants, and combinations thereof. Examples of cationic surfactants include, but are not limited to R_{f}¹⁻CH₂CH₂SCH₂CH(OH)CH₂N(CH₃)₃⁺Cl⁻, other cationic surfactants, and combinations thereof. Examples of anionic surfactants include, but are not limited to, C₁₂H₂₅(OCH₂CH₂)₄OSO₃⁻NH₄⁺, C₁₂H₂₇-C₆H₄-SO₃⁻Na⁺, other anionic surfactants, and combinations or two or more thereof. In each formula, R_{f}¹ is a perfluoroalkyl group generally having 3-18 carbon atoms. The preferred surfactants are nonionic surfactants having polyethylene glycol in the molecular chain. The use of a nonionic surfactant, such as R_{f}¹-CH₂CH₂-O-(CH₂CH₂O)₁₁-H wherein R_{f}¹ is a C₃₋₁₈ perfluoroalkyl group is preferred.

A variety of additives, including inorganic and organic fillers, antioxidants, heat stabilizers, ultraviolet absorbers, lubricants, waxes, colorants and crystallization promoters, either independently or combinations of a plurality thereof may be used.

The emulsion can be used as is or, if necessary, after dilution or other modification to the desired concentration, by application to the surface of a conduit using any means known to one skilled in the art. For example, impregnation, dipping, coating, spraying, or combinations of two or more thereof can be used. The emulsion-treated surface can be optionally heat-treated at 150 to 500°C, or 200 to 450°C for 1 minute to 10 hours. Heat treatment can accelerate hydrolysis of the fluorocarbon silane or hydrolysis of the alkoxysilane and copolycondensation of the hydrolyzate. A thin film containing a copolycondensate of a fluorocarbon silane, or its hydrolyzate, and an alkoxysilane can be formed. The heat treatment temperature and time period can be set to the optimal values after taking into consideration such factors as the fluid repellency of the surface film and cost effectiveness of treatment.

The substrate surface can provide a highly adhering fluid-repellent layer regardless of whether the surface is pretreated or has a primer layer or not

A further embodiment of the invention is a process for coating a fluid conduit comprising (1) contacting the surface of a conduit with a substantially aqueous emulsion and (2) drying said emulsion to produce a thin film having a thickness of from 0.1 nm to 10,000 nm, preferably 1 to 1,000 nm on the surface of said conduit wherein said conduit and said emulsion are as described above.

The following examples illustrate, but not limit the scope of the invention, a nozzle having a fluid repellent layer and a method for formation thereof.

### EXAMPLES

The components used were as follows.

A fluorocarbonsilane, which was a perfluoroalkyl mixture represented by R_{f}(CH₂)₂-Si((O-CH₂CH₂)₂-OCH₃)₃, was used. R_{f} is F(CF₂)ₖ (k=6, 1-2wt%; k=8, 62-64 wt%; k=10,23-30 wt%; k=12-18, 2-6 wt%).

A surfactant, a nonionic surfactant represented by R_{f} -CH₂CH₂-O-(CH₂CH₂O)₁₁-H was used, where R_{f}' is a perfluoroalkyl group having 3-18 carbon atoms.

The silicate used was a tetrakis(2-(2-methoxyethoxy)ethoxy)silicate (Si(DEGM)₄). The organoalkoxysilane was CH₃Si(OCH₃)₃.

### Example 1

The surfactant at 30 parts by weight, relative to the fluorocarbon silane at 100 parts by weight, was dissolved in water and 10 weight % fluorocarbon silane was slowly added based on the total weight of the aqueous emulsion while stirring by an ordinary stirring technique (magnetic bar). The self-condensation of the fluorocarbon silane was suppressed, and its hydrolyzed state was maintained. A phosphoric acid was added while measuring pH of the emulsion by a pH meter. When the pH reached 2.0, the addition of the phosphoric acid was stopped. Organoalkoxysilane was added such that the molar fraction of the organoalkoxysilane with respect to the fluorocarbon silane was 0.45 to produce a water-based emulsion.

Then, after stirring for 2 to 4 hours, the emulsion was coated on a ceramic nozzle of substrate (dimension of a ceramic nozzle plate; 5mm x 25mm, thickness 0.5mm, pore size 40 micrometer), followed by baking for 60 minutes at 200°C in an oven. This resulted in a uniform (visual observation) formation of about 50 nm thick fluid-repellent layer on the substrate surface.

A measurement was made of the contact angle with respect to an oil-based ink (30% each of 2-butoxyethyl acetate, propanol, and cyclohexane) dropped on the substrate surface according to conventional contact angle measurement method where the initial value was 63°, a high fluid-repellency.

In order to check the adhesion of the fluid-repellent layer to the substrate, the layer was subjected to an abrasion test using a rubber wiper (automotive type) to carry out 100 reciprocal repeated wiping motions on the layer. After the 100 reciprocal wipings, the layer exhibited an oil-based ink contact angle of 56°, substantially the same as the original 63°.

The nozzle thus prepared was mounted on an industrial inkjet printer to carry out an ink ejection test, which showed that good ejection continued with no ink adhering to the nozzle section. This nozzle was used for the ink ejection part in an industrial inkjet printer.

### Example 2

An aqueous emulsion, the same as that of Example 1, was coated onto a polyimide resin nozzle surface by dipping, followed by baking 60 minutes at 200°C in an oven. This resulted in a uniform formation of an about 50 nm thick fluid repellent layer on the substrate surface.

Contact angles with respect to water and hexadecane were measured and high fluid-repellency was observed. It had a contact angle with respect to water of 119° and a contact angle with respect to hexadecane of 77°. Water and hexadecane were used because the nozzle ejection components are both aqueous and oily so that these were used as the target of measurement for representative examples.

In order to confirm the adhesion of the fluid-repellent layer to the substrate, the fluid-repellent layer-treated nozzle was dipped in an organic solvent for an ultrasonic wave cleaning test.

After an ultrasonic wave cleaning at 23°C for 150 minutes, the contact angle was 113°, with respect to water, and 75°, with respect to hexadecane. Therefore, there was no drop in fluid-repellency after an ultrasonic wave cleaning, indicating a high durability.

### Comparative Example 1

A polyimide resin nozzle the same as that of Example 2 was used without coating on which the contact angles on the surface with respect to water and hexadecane were measured. The contact angle with respect to water was 74° and with respect to hexadecane it was 8° showing insufficient fluid-repellency.

### Example 3

The surfactant at 30 parts by weight (relative to the fluorocarbon silane at 100 parts by weight) was dissolved in water and 10 weight % fluorocarbon silane was slowly added based on the total weight of the aqueous emulsion while stirring by an ordinary stirring technique (magnetic bar). The self-condensation of the fluorocarbon silane was suppressed, and its hydrolyzed state was maintained. Hydrochloric acid was added while measuring pH of the emulsion by a pH meter. When the pH reached 2.0, the addition of the hydrochloric acid was stopped. Tetrakis[2-(2-methoxyethoxy)ethoxy]silicate was added such that the molar fraction of the tetrakis[2-(2-methoxyethoxy)ethoxy]silicate was 0.45 to produce a water-based emulsion. Then, after stirring the emulsion for 2 to 4 hours, it was coated on the substrate.

A metal nozzle surface was coated with this emulsion, followed by baking for 60 minutes at 200°C. This resulted in a uniform formation of an about 50nm thick fluid repellent layer on the substrate surface.

The layer was subjected to an abrasion test involving 100,000 reciprocal repeated abrasions using a silicone rubber blade, after which contact angles with respect to a dye ink and to water were measured. The specific sample conditions called for coating with the dye ink once and 10 wipes with the rubber blade.

The contact angle with respect to dye ink had an initial value of 87°, which was 67° after about 100,000 reciprocal abrasions. The contact angle with respect to water had an initial value of 118°, which was 91° after 100,000 reciprocal abrasions. Both evaluations reflected outstanding contact angles, showing good fluid-repellency and durability.

### Comparative Example 2

A metal nozzle the same as that of Example 3 was used for a measurement of the contact angle without any coating thereof, which turned out to be 36° with respect to water, confirming insufficient fluid-repellency.

### Example 4

An aqueous emulsion the same as that of Example 3 was coated on a metal nozzle surface, followed by baking 60 minutes at 200°C. This resulted in a uniform formation of about 50nm thick fluid-repellent layer on the substrate surface.

The treated nozzle was used to eject a solvent (N-methylpyrrolidinone) for 15 days (8 hours/days), followed by a frequent wiping with cloth and with silicone rubber, after which contact angles with respect to xylene and toluene were measured.

The initial value for the contact angle with respect to xylene was 70°, while that with respect to toluene was 68°. After wiping, the contact angles with respect to xylene and toluene were held at 70° or higher, confirming excellent fluid repellency and durability.

### Comparative Example 3

A metal nozzle the same as that of Example 4 was used, without being coated with the emulsion, on which contact angles with respect to xylene and toluene were measured with no surface coating to give a contact angle with respect to xylene of 4° and that with respect to toluene of 7°, confirming insufficient-fluid repellency.

In these examples, nonionic surfactants were used as a surface surfactant component, but any type can be used as long as it can stabilize the emulsion, including anionic, cationic, nonionic, amphoteric, or any other known surfactant types. The silicon compound can be any silicate or organoalkoxysilane which can be added to increase the adhesion of the film.

## Claims

1. A conduit having its surface or a portion of its surface coated with a fluid-repellent layer wherein said layer is produced from a substantially aqueous emulsion; said layer has a thickness of from 0.1 nm to 10,000 nm; said emulsion is produced from (1) a fluorocarbon silane or its hydrolyzate, (2) water, and (3) a surfactant, a silicon compound, and a catalyst which is an acid; said fluorocarbon silane has the formula R_{f}-(CH₂)ₚ-Si{-(O-CH₂CH₂)ₙ-OR¹}₃; said silicon compound is a silicate or an organoalkoxysilane; R_{f} is a C₃₋₁₈ perfluoroalkyl group or combinations of two or more thereof; each R¹ is independently one or more C₁₋₃ alkyl groups; p is 2 to 4; and n is 2 to 10.

2. A conduit according to claim 1 wherein said conduit is a nozzle.

3. A conduit according to claim 1 or 2 wherein said fluorocarbon silane is perfluoro alkyl ethyl tris(2-(2-methoxyethoxy)ethoxy)silane, perfluoro alkyl ethyl tris(2-(2-(2-methoxyethoxy)ethoxy)ethoxy) silane, or combinations thereof.

4. A conduit according to claim 3 wherein said silicon compound is a silicate or organoalkoxysilane, said silicate has the formula of Si-(R)₄, each R is independently OCH₃, OCH₂CH₃, (OCH₂CH₂)ₘOCH₃, m=1-10, or combinations of two or more thereof; said organoalkoxysilane has the formula of R²_{q}Si(OR³)_{4-q}, each R² is independently an alkyl group containing 1 to 10 carbon atoms; each R³ is independently an alkyl group containing 1 to 3 carbon atoms; and q=1-3.

5. A conduit according to claim 4 wherein said silicon compound is tetrakis(2-(2-methoxyethoxy)ethoxy)silicate, dimethyldimethoxysilane, methyltrimethoxy silane, methyltriethoxysilane, 3-aminopropyltriethoxy silane, N-(2-aminoethyl)3-aminopropyldiethoxy silane, 3-glycidoxypropyltrimethoxy silane, one or more partial condensation products thereof, or combinations of two or more thereof.

6. A conduit according to any of the preceding claims wherein said surfactant is R_{f}¹-CH₂CH₂-O-(CH₂CH₂O)₁₁-H, C₉H₁₉-C₆H₄-O-(CH₂CH₂O)₅₀-H, R_{f}¹⁻CH₂CH₂SCH₂CH(OH)CH₂N(CH₃)₃⁺Cl⁻, C₁₂H₂₅(OCH₂CH₂)₄OSO₃⁻NH₄⁺, C₁₂H₂₇₋C₆H₄-SO₃Na⁺, or combinations or two or more thereof wherein R_{f}¹ is a C₃₋₁₈ perfluoroalkyl group.

7. A conduit according to any of the preceding claims wherein said conduit is a ceramic, polyimide, or metal, or is produced from a ceramic, polyimide, or metal.

8. A conduit according to claim 7 wherein said conduit is an ink jet printer nozzle or a nozzle for a machine.

9. A process for coating a fluid conduit comprising (1) contacting the surface of a conduit with a substantially aqueous emulsion and (2) drying said emulsion to produce a thin film having a thickness of from 0.1 nm to 10,000 nm, preferably 1 to 1,000 nm on the surface of said conduit wherein said conduit is as recited in claim 7 or 8; said emulsion is the same as recited in any of claims 1 to 6.

## Patentansprüche

1. Leitung mit ihrer Oberfläche oder einem Teil ihrer Oberfläche beschichtet mit einer flüssigkeitsabstoßenden Schicht, worin die Schicht aus einer im Wesentlichen wässrigen Emulsion hergestellt ist; die Schicht eine Dicke von 0,1 nm bis 10 000 nm aufweist; die Emulsion aus (1) einem Fluorkarbon-Silan oder seinem Hydrolysat, (2) Wasser und (3) einem oberflächenaktiven Mittel, einer Siliziumverbindung und einem Katalysator, bei dem es sich um eine Säure handelt, hergestellt ist; das Fluorkarbon-Silan die Formel R_{f}-(CH₂)ₚ-Si{-(O-CH₂CH₂)ₙ-OR¹}₃ aufweist; die Siliziumverbindung ein Silikat oder ein Organoalkoxysilan darstellt; R_{f} eine C₃₋₁₈-Perfluoralkylgruppe oder Kombinationen aus zwei oder mehr davon darstellt; jedes R¹ unabhängig eine oder mehr C₁₋₃-Alkylgruppe(n) darstellt; p für 2 bis 4 steht; und n für 2 bis 10 steht.

2. Leitung nach Anspruch 1, worin die Leitung eine Düse darstellt.

3. Leitung nach Anspruch 1 oder 2, worin das Fluorkarbon-Silan für Perfluoralkylethyl-tris(2-(2-methoxyethoxy)ethoxy)silan, Perfluoralkylethyl-tris(2-(2-(2-methoxyethoxy)ethoxy)ethoxy)silan oder Kombinationen davon steht.

4. Leitung nach Anspruch 3, worin die Siliziumverbindung ein Silikat oder Organoalkoxysilan darstellt, das Silikat die Formel von Si-(R)₄ aufweist, jedes R unabhängig OCH₃, OCH₂CH₃, (OCH₂CH₂)ₘOCH₃, m = 1-10, oder Kombinationen von zwei oder mehr davon darstellt; Organoalkoxysilan die Formel von R²_{q}Si(OR³)_{4-q} aufweist; jedes R² unabhängig eine Alkylgruppe, enthaltend 1 bis 10 Kohlenstoffatom(e) darstellt; jedes R³ unabhängig eine Alkylgruppe, enthaltend 1 bis 3 Kohlenstoffatom(e) darstellt; und q = 1-3 darstellt.

5. Leitung nach Anspruch 4, worin die Siliziumverbindung Tetrakis(2-(2-methoxyethoxy)ethoxy)silikat, Dimethyldimethoxysilan, Methyltrimethoxysilan, Methyltriethoxysilan, 3-Aminopropyltriethoxysilan, N-(2-Aminoethyl)3-aminopropyldiethoxysilan, 3-Glycidoxypropyltrimethoxysilan, ein oder mehr teilweise(s) Kondensationsprodukt(e) davon, oder Kombinationen aus zwei oder mehr davon darstellt.

6. Leitung nach einem der vorangehenden Ansprüche, worin das oberflächenaktive Mittel R_{f}¹-CH₂CH₂-O-(CH₂CH₂O)₁₁-H, C₉H₁₉-C₆H₄-O-(CH₂CH₂O)₅₀-H, R_{f}¹-CH₂CH₂SCH₂CH(OH)CH₂N(CH₃)₃⁺Cl⁻, C₁₂H₂₅(OCH₂CH₂)₄ OSO₃NH₄⁺, C₁₂H₂₇-C₆H₄-SO₃⁻Na⁺, oder Kombinationen oder zwei oder mehr davon darstellt, worin R_{f}¹ für eine C₃₋₁₈-Perfluoralkylgruppe steht.

7. Leitung nach einem der vorangehenden Ansprüche, worin die Leitung ein Keramikmaterial, Polyimid oder Metall darstellt oder aus einem Keramikmaterial, Polyimid oder Metall hergestellt ist.

8. Leitung nach Anspruch 7, worin die Leitung eine Tintenstrahldruckerdüse oder eine Düse für eine Maschine darstellt.

9. Verfahren zum Beschichten einer Flüssigkeitsleitung, umfassend: (1) Kontaktieren der Oberfläche einer Leitung mit einer im Wesentlichen wässrigen Emulsion und (2) Trocknen der Emulsion zur Herstellung eines dünnen Films mit einer Dicke von 0,1 nm bis 10 000 nm, bevorzugt 1 bis 1 000 nm, auf der Oberfläche der Leitung, worin die Leitung für wie in Ansprüchen 7 oder 8 angegeben steht; wobei die Emulsion die gleiche, wie in einem der Ansprüche 1 bis 6 angegeben ist, darstellt.

## Revendications

1. Conduit avec sa surface ou une portion de sa surface revêtue avec une couche repoussant les fluides, dans lequel ladite couche est produite à partir d'une émulsion substantiellement aqueuse; ladite couche possède une épaisseur de 0,1 nm à 10.000 nm; ladite émulsion est produite à partir (1) d'un silane fluorocarbure ou de son hydrolysat, (2) d'eau et (3) d'un tensioactif, un composé de silicium, et d'un catalyseur qui est un acide; ledit silane fluorocarbure possède la formule R_{f}-(CH₂)ₚ-Si{-(O-CH₂CH₂)ₙ-OR¹}₃; ledit composé de silicium est un silicate ou un organoalkoxysilane; R_{f} est un groupe perfluoroalkyle C₃₋₁₈ ou des combinaisons de deux ou plus de celui-ci; chaque R¹ est indépendamment un ou plusieurs groupes alkyles C₁₋₃; p est de 2 à 4; et n est de 2 à 10.

2. Conduit suivant la revendication 1, où ledit conduit est une buse.

3. Conduit suivant la revendication 1 ou 2, dans lequel ledit silane fluorocarbure est perfluoroalkyléthyltris(2-(2-méthoxyéthoxy)éthoxy)silane, perfluoroalkyléthyltris(2-(2-(2-méthoxyéthoxy)éthoxy)éthoxy)silane ou des combinaisons de ceux-ci.

4. Conduit suivant la revendication 3, dans lequel ledit composé de silicium est un silicate ou un organoalkoxysilane, ledit silicate possède la formule de Si-(R)₄, chaque R est indépendamment OCH₃, OCH₂CH₃, (OCH₂CH₂)ₘOCH₃, m = 1-10 ou des combinaisons de deux ou plus de ceux-ci; ledit organoalkoxysilane possède la formule de R²qSi(OR³)_{4-q}, chaque R² est indépendamment un groupe alkyle contenant de 1 à 10 atomes de carbone; chaque R³ est indépendamment un groupe alkyle contenant de 1 à 3 atomes de carbone; et q = 1-3.

5. Conduit suivant la revendication 4, dans lequel ledit composé de silicium est le tétrakis(2-(2-méthoxyéthoxy)éthoxy)silicate, le diméthyldiméthoxysilane, le méthyltriméthoxysilane, le méthyltriéthoxysilane, le 3-aminopropyltriéthoxysilane, le N-(2-aminoéthy)-3-aminopropyldiéthoxysilane, le 3-glycidoxypropyltriméthoxysilane, un ou plusieurs produits de condensation partielle de ceux-ci ou des combinaisons de deux ou plus de ceux-ci.

6. Conduit suivant l'une quelconque des revendications précédentes, dans lequel ledit tensioactif est R_{f}¹-CH₂CH₂-O-(CH₂CH₂O)₁₁ -H, C₉H₁₉-C₆H₄-O-(CH₂CH₂O)₅₀-H, R_{f}¹⁻CH₂CH₂SCH₂CH(OH)CH₂N(CH₃)₃⁺Cl⁻, C₁₂H₂₅(OCH₂CH₂)₄OSO₃⁻NH₄⁺, C₁₂H₂₇-C₆H₄₋SO₃⁻Na⁺ ou des combinaisons de deux ou plus de ceux-ci, où R_{f}¹ est un groupe perfluoroalkyle C_{3-18.}

7. Conduit suivant l'une quelconque des revendications précédentes, où ledit conduit est une céramique, un polyimide ou un métal ou il est produit à partir d'une céramique, d'un polyimide ou d'un métal.

8. Conduit suivant la revendication 7, où ledit conduit est une buse d'imprimante à jet d'encre ou une buse pour une machine.

9. Procédé pour le revêtement d'un conduit de fluide comprenant (1) la mise en contact de la surface d'un conduit avec une émulsion substantiellement aqueuse et (2) le séchage de ladite émulsion pour produire un film mince possédant une épaisseur de 0,1 nm à 10.000 nm, de préférence de 1 à 1.000 nm sur la surface dudit conduit, où ledit conduit est comme il est énoncé dans la revendication 7 ou 8; ladite émulsion est la même que celle énoncée dans l'une quelconque des revendications 1 à 6.
